# EUROPEAN PATENT APPLICATION

(11) **EP 1 559 324 A1**
(43) Date of publication of application: **03.08.2005**
(21) Application number: 03810635.7
(22) Date of filing: 06.11.2003
(51) Int. Cl.: A23B 4/14

(54) **FISHES TREATED WITH LACTIC ACID BACTERIUM CULTURE MEDIUM HAVING ANTIBACTERIAL AND ANTIXOIDATIVE EFFECTS**

(30) Priority: 06.11.2002 JP 2002322874
(71) Applicant: NIPPON SUISAN KAISHA, LTD., Tokyo 100-8686 (JP)
(72) Inventor: DOUMOTO, Nobuhiko, Nippon Suisan Kaisha, Ltd., Hachioji-shi, Tokyo 192-0906 (JP); TAKAHASHI, Akiko, Nippon Suisan Kaisha, Ltd., Hachioji-shi, Tokyo 192-0906 (JP); NASU, Masayuki, Nippon Suisan Kaisha, Ltd., Hachioji-shi, Tokyo 192-0906 (JP); OBA, Takahiro, Nippon Suisan Kaisha, Ltd., Hachioji-shi, Tokyo 192-0906 (JP)
(74) Representative: TBK-Patent
(86) International application number: PCT/JP2003/014160
(87) International publication number: WO 2004/040988

(57) **Abstract**

Fish and shellfish meat whose color tone is well preserved, particularly no Listeria contamination and in which discoloration is effectively prevented, and smoked products prepared from such fish and shellfish meat are provided.

Fish meat which is no Listeria contamination and in which discoloration is prevented can be obtained by treating the meat with a cultivation medium used for cultivating lactic acid bacteria. Specifically, the meat is immersed preferably in a sterilized or disinfected cultivation medium used for cultivating a lactic acid bacterium having antibacterial and anti-oxidative effects, or two lactic acid bacteria in combination, one having antibacterial effect and the other anti-oxidative effect. Combinational use of Lactobacillus sake D-1001 (FERM P-11708 or IPOD FERM BP-08544) and Lactococcus lactis IFO 12007 is preferred. The fish meat is preferably derived from salmon, trout or cod, and the inventive method is particularly effective for fish meat containing astaxanthin.

## Description

### Technical Field

The present invention relates to fish and shellfish meat treated with a lactic acid bacteria cultivation medium having antibacterial and anti-oxidative effects. The present invention also relates to fish and shellfish meat free from Listeria contamination and in which decoloration is inhibited.

### Background Art

The conventional process of smoking fish and shellfish meat to produce smoked fish meat (also called "smoked product") includes immersing the fish and shellfish meat ("fish meat" hereinafter) in a solution containing a high concentration of salt for a long time (curing), in order to prevent the meat from being contaminated by microbes. Generally, the curing consists of immersing the fish meat overnight in a solution containing 15% or more salt. As a consequence, the resulting smoked product contains a rather high concentration of salt.

The smoked product contains 3% or more salt to avoid the risk of microbial contamination. However, consumers want to eat less salty smoked products, or so-called lightly-salted smoked products. Moreover, with regard to smoked salmon meat, i.e., a smoked product which is the most abundantly consumed in the market, astaxanthin contained in the meat may be metabolized as a result of oxidation or exposure to light, which causes decoloration of the smoked salmon meat. To meet this problem, recently several attempts have been undertaken to inhibit oxidization using an antioxidant such as vitamin C or the like. One such attempt consists of using orange juice to preserve the taste, flavor and color of a smoked product (see, for example, Patent Document 1). This attempt was undertaken with a view to utilizing vitamin C or the like contained in orange juice as an antioxidant.

In the production of food products, a lactic acid bacteria cultivation medium has been frequently used as a preserving agent. Lactic acid bacteria used for this purpose largely belong to Lactococcus lactis ssp. Lactis which produces nisin, an antibacterial substance (see, for example, Patent Document 2). Some other attempts use, in addition to lactic acid bacteria, Bifidobacterium or propionic acid bacterium, expecting that organic acids produced by the latter bacterium may have some additional antibacterial effect (see, for example, Patent Documents 3 and 4). Although those bacterial species are known to be antibacterial to pathogenic bacteria, their anti-oxidative effect has not been documented.

An example involving the use of lactic acid bacteria in the production of fish meat products uses salt and fermented milk (see Patent Document 5).
Patent Document 1: Japanese Unexamined Patent Application Publication No. 6-38674
Patent Document 2: Japanese Unexamined Patent Application Publication No. 8-187071
Patent Document 3: Japanese Unexamined Patent Application Publication No. 7-51038
Patent Document 4: Japanese Unexamined Patent Application Publication No. 8-187072
Patent Document 5: Japanese Unexamined Patent Application Publication No. 5-308895

### Disclosure of Invention

Fish meat products such as smoked ones obtained by conventional methods including no sterilization have the risk of being contaminated by Listeria bacteria or the like. Moreover, with regard to smoked salmon meat, pigments in the meat such as astaxanthin are decolored due to oxidization or exposure to light, which may lower the marketing value of the meat. An object of the present invention is to provide fish meat products which are less likely to be contaminated by bacteria and whose color tone is preserved, particularly fish meat products which is not contaminated by Listeria species and whose color tone is preserved.

One feature of the present invention is fish meat treated by "a lactic acid cultivation medium in which lactic acid bacteria were cultivated" ("lactic acid cultivation medium" hereinafter), which has antibacterial and anti-oxidative effects due to substances produced by the lactic acid bacteria.

The lactic acid bacteria may consist of a strain having antibacterial and anti-oxidative effects, or a combination of a strain having antibacterial effect and another strain having anti-oxidative effect. In this connection, another feature of the present invention is fish meat treated by lactic acid cultivation medium, which has antibacterial and anti-oxidative effects due to substances produced by a lactic acid bacterium having antibacterial and anti-oxidative effects, or two lactic acid bacteria cultivated in combination, one having antibacterial effect and the other anti-oxidative effect.

The above fish meat is free from Listeria contamination, and its color tone is preserved. In this connection, yet another feature of the present invention is fish meat free from Listeria contamination and whose color tone is preserved by treating the meat with a lactic acid bacteria cultivation medium which has antibacterial and anti-oxidative effects due to substances produced by the lactic acid bacteria, preferably by a lactic acid bacterium having antibacterial and anti-oxidative effects, or by two lactic acid bacteria cultivated in combination, one having antibacterial effect and the other having anti-oxidative effect.

The above lactic acid bacteria cultivation medium is sterilized or disinfected. In this connection, yet another feature of the present invention is fish meat preferably free from Listeria contamination and whose color tone is preserved by treating the meat with a sterilized or disinfected lactic acid bacteria cultivation medium which has antibacterial and anti-oxidative effects due to substances produced by the lactic acid bacteria, preferably by a lactic acid bacterium having antibacterial and anti-oxidative effects, or two lactic acid bacteria cultivated in combination, one having antibacterial effect and the other anti-oxidative effect.

The treatment consists of immersing fish meat in a lactic acid bacteria cultivation medium. In this connection, yet another feature of the present invention is fish meat preferably free from Listeria contamination and whose color tone is preserved by immersing the meat preferably in a sterilized or disinfected cultivation medium which has antibacterial and anti-oxidative effects due to substances produced by the lactic acid bacteria, preferably by a lactic acid bacterium having antibacterial and anti-oxidative effects, or two lactic acid bacteria cultivated in combination, one having antibacterial effect and the other anti-oxidative effect.

The lactic acid bacteria mentioned above include Lactobacillus sake D-1001 (preserved initially as a domestic deposit under the ID code of FERM P-11708, then transferred to International Patent Organism Depository, National Institute of Advanced Industrial Science and Technology (Tsukuba Central 6, 1-1-1, Higashi, Tsukuba, Ibaraki, Japan) on November 6 2003 and preserved there as an international deposit under the ID code of IPOD FERM BP-08544), and Lactococcus lactis IFO 12007. In this connection, yet another feature of the present invention is fish meat preferably free from Listeria contamination and whose color tone is preserved preferably by immersing the meat preferably in a sterilized or disinfected cultivation medium which has antibacterial and anti-oxidative effects due to substances produced by the lactic acid bacteria, preferably by Lactobacillus sake D-1001 (FERM P-11708 or IPOD FERM BP-08544) and Lactococcus lactis IFO 12007 cultivated in combination, i.e., a lactic acid bacteria having antibacterial and anti-oxidative effects,.

The present inventors found that Lactobacillus sake D-1001 (FERM P-11708 or IPOD FERM BP-08544) is a lactic acid bacterium capable of producing substances that exhibit not only high sterilizing effect against gram-positive pathological bacteria such as Listeria etc., but also high anti-oxidative effect which protects pigments such as astaxanthin in fish meat from decoloration which might otherwise occur as a result of oxidization.

A feature of the present invention is an anti-oxidative agent containing a cultivation medium used for cultivating Lactobacillus sake D-1001 (FERM P-11708 or IPOD FERM BP-08544). Another feature of the present invention is a decoloration-preventing agent based on the anti-oxidative effect of a cultivation medium used for cultivating Lactobacillus sake D-1001 (FERM P-11708 or IPOD FERM BP-08544), particularly a decoloration-preventing agent useful for the production of astaxanthin-containing food products.

### Brief Description of the Drawings

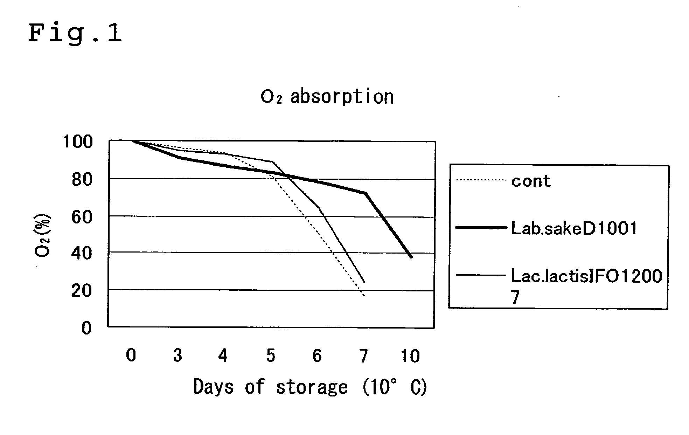

Fig. 1 shows a graph demonstrating an advantage of the present invention, i.e., anti-oxidative effect, the graph plotting the absorption of oxygen as a function of the days of storage.

### Best Mode for Carrying Out the Invention

The present invention utilizes a cultivation medium used for cultivating a lactic acid bacterium having antibacterial and anti-oxidative effects, or two lactic acid bacteria in combination, one having antibacterial effect and the other anti-oxidative effect. Therefore, lactic acid bacteria to be used according to the invention are not limited to any specific lactic bacteria, as long as they have antibacterial and/or anti-oxidative effects. A lactic acid bacterium having antibacterial and anti-oxidative effects may be used. However, combinational use of a lactic acid bacterium having high antimicrobial effect and another lactic acid bacterium having high anti-oxidative effect is rational and more preferred. The usefulness of a lactic acid bacterium for the method of the invention is not determined solely by its antibacterial effect or anti-oxidative effect. Its having no adverse effect on the taste and flavor of the resulting fish meat products is also important.

Suitable lactic acid bacteria to be used in the invention include lactic acid bacteria that can destroy common bacteria through antibacterial substances such as bacteriocins and lactic acid they produce during lactic acid fermentation, e.g., lactic acid bacteria belonging to the genera Leuconostoc, Lactobacillus, Lactococcus, Pediococcus, etc. It may also be possible to isolate a novel microorganism belonging to the above genera from a food product, and use it according to the method of the invention.

Since the material to be used in the present invention consists of fish meat, it is preferable to use lactic acid bacteria that have high antibacterial effect against gram-positive pathogenic bacteria such as Listeria bacteria, and high anti-oxidative effect so that pigments such as astaxanthin contained in the fish meat can be prevented from decoloration which might otherwise occur as a result of oxidization. For example, combinational use of Lactobacillus sake D-1001 (FERM P-11708 or IPOD FERM BP-08544) and Lactococcus lactis IFO 12007 is preferred. Combinational use of Lactobacillus sake D-1001 (FERM P-11708 or IPOD FERM BP-08544), which has a high anti-oxidative effect, and Lactococcus lactis IFO 12007, which has a high antibacterial effect, is also preferred because it not only prevents the development of a foul odor due to putrefaction resulting from microbial contamination or to oxidation, but does not have any adverse effect on the taste and flavor of the treated food.

The antibacterial effect of a lactic acid bacterium against, for example, a Listeria bacterium can be evaluated by the disc method. Suitable lactic acid bacteria with regard to antibacterial effect can be selected according to the evaluation results obtained from candidate lactic acid bacteria. The anti-oxidative effect of a lactic acid bacterium can be evaluated based on its AV (acid value) and POV (peroxide value). Suitable lactic acid bacteria with regard to anti-oxidative effect can be selected according to the evaluation results obtained from candidate lactic acid bacteria.

Cultivation of lactic acid bacteria may occur in any medium, as long as the medium allows the growth of the bacteria therein. However, use of a medium containing sugars at 2% or more and proteins at 2% or more is preferred. For example, a dairy product can be used as a medium. However, a simple medium selected appropriately according to a given purpose is more preferred because the coexistence of any unnecessary substances may have some adverse effect on fish meat treated by the medium: for example, the flavor characteristic of a diary product may affect the flavor of the treated fish meat, or a particular ingredient in the dairy product absorbed into the fish meat may act as an allergen.

Sterilization of lactic acid bacteria is achieved by heating. The heating temperature is not limited to any specific range, as long as it is sufficiently high to destroy lactic acid bacteria. However, sterilization preferably occurs by pasteurization consisting of heating at 65°C for 30 minutes. Disinfection of a lactic acid bacteria cultivation medium occurs, for example, by filtration through a membrane having a pore size of 0.22 µ.

Fish meat treated by the method of the invention is free from Listeria contamination because the fish meat is treated with a lactic acid bacteria cultivation medium, and the color tone is protected against decoloration. Fish meat may be derived from any fish including their eggs such as salmon, blue grenadier, saurel, tuna, bonito, cod, etc.; cephalopods such as squid, octopus, etc.; crustacea such as shrimp, krill, etc.; and shellfish, etc., and is not limited to any specific fish or marine organisms. However, illustrative preferred fish include salmon, trout and cod.

To produce high quality fish meat products, the number of common bacteria inhabiting the fish meat is preferably 10³ or lower. The lactic acid bacteria cultivation medium of the invention is, because of its high anti-oxidative effect, effective in inhibiting the decoloration of pigments which would otherwise occur as a result of oxidization, and is particularly useful in maintaining the color tone of fish meat obtained from salmon, which is rich in astaxanthin or a pigment which is readily decolored as a result of oxidation. Illustrative fish to which the present invention is specifically directed are fish whose meat is rich in astaxanthin.

The method of the invention can be applied to fresh and pasteurized fish meat, and fresh and pasteurized fish eggs, is profitably applied to fresh fish meat slices, e.g., sashimi, and is particularly profitably employed in the production of smoked fish meat products requiring long-term storage safety. A preferred embodiment of the invention is a smoked product obtained from fish meat which has been treated by cultivation medium used for cultivating a lactic acid bacterium having antibacterial and anti-oxidative effects, or two lactic acid bacteria cultivated in combination, one having antibacterial effect and the other anti-oxidative effect.

Suitable shapes of the fish meat to which the method of the invention is applied are not limited to any specific ones, but preferably include, for example, fillets, slices, etc.

According to the method of the invention, the lactic acid cultivation medium is preferably sterilized or disinfected. According to the method of the invention, preferably fish meat or a material of a food product is immersed in a solution prepared as described below, and kept there at a low temperature equal to or lower than 10°C, the solution being obtained by inoculating lactic acid bacteria in an appropriate medium to grow therein, and sterilizing or disinfecting the resulting cultivation medium. As a result of these procedures, pathogenic bacteria such as Listeria species are destroyed, and anti-oxidative substances contained in the solution permeate through the fish meat, which enables the production of fish meat in which decoloration is inhibited. Treatment using a lactic acid cultivation medium may occur by way of injection, spreading, spraying, etc., in addition to immersion, and is not limited to any specific manner of application, as long as that manner of application allows the fish meat to be exposed to the lactic acid bacteria cultivation medium at a specified concentration or higher.

A general smoking process for fish meat including the treatment with a lactic acid bacteria cultivation medium according to the invention consists of immersing fish meat in a cultivation medium used for cultivating a lactic acid bacterium having antibacterial and anti-oxidative effects, or two lactic acid bacteria, one having antibacterial effect and the other having anti-oxidative effect, and smoking and drying the thus treated fish meat to produce a smoked fish meat product excellent in storage safety. The process is specified as follows. Fish meat serving as a starting material may be fresh or frozen, but the material should be handled with the utmost care in order to prevent microbial contamination as much as possible. Edible meat blocks prepared from fish or shellfish are used as they are. On the other hand, lactic acid bacteria are cultivated to grow to about 10⁹/g. The lactic acid bacteria cultivation medium is subjected to pasteurization at a low temperature to destroy lactic acid bacteria therein, or lactic acid bacteria are removed by filtration through a membrane. It is possible not only to destroy common bacteria contaminating the fish meat material but also to prevent the discoloration of the fish meat material by immersing the meat material in a sterilized (or disinfected) lactic acid bacteria cultivation medium kept at 10°C or lower for 30 minutes.

The density of lactic acid bacteria contained in a crude lactic acid cultivation medium should be chosen as appropriate according to a given purpose and the size of the material, but is preferably about 10⁵ to 10⁹/g.

After being immersed in the lactic acid bacteria cultivation solution, the fish meat material is smoked, and dried with the temperature and humidity controlled. This step may be carried out by any given common method, and is not limited to any specific one. The resulting smoked fish meat product is so excellent in long-term storage safety due to antibacterial substances produced by lactic acid bacteria that it can be safely stored at normal temperature, or chilled or frozen depending on its dry or moist state.

The method of the present invention applied herein will be detailed by means of examples, but the present invention applied herein is not limited by these examples.

### EXAMPLE 1

Frozen trout (Nippon Suisan Kaisha Ltd. product) was thawed, washed with running water, and divided into two equal meat portions and a central spinal column portion. The meat portions were immersed in an aqueous solution of 15% salt overnight, and rinsed with running water for 30 minutes to remove excess salt from the meat portions. On the other hand, a mixture comprising Lactococcus lactis 12007 and Lactobacillus sake D-1001 was allowed to grow on a medium containing, for every 1 1 of water, 10 g of salt, 10 g of glucose, 10 g of yeast extract and 30 g of soybean protein for 24 hours to give a density of 10⁹ cells/g, and the cultivation medium was sterilized by being heated at 65°C for 30 minutes. The meat portions were immersed in the sterilized solution at 10°C for 30 minutes. Then, the meat portions were dried at 20°C for two hours, and smoked for four hours to produce smoked salmon meat.

As Reference Examples, similar smoked salmon meat samples were prepared in the same manner as in Example 1 except that they were exposed to either of two cultivation media, one of which had been used for cultivating Lactococcus lactis 12007 alone and the other for cultivating Lactobacillus sake D-1001 alone.

### Comparative Example 1

Frozen trout (Nippon Suisan Kaisha Ltd. product) was thawed, washed with running water, and divided into two equal meat portions and a central spinal column portion. The meat portions were immersed in an aqueous solution of 15% salt overnight, and rinsed with running water for 30 minutes to remove excess salt from the meat portions. Then, the meat portions were dried at 20°C for two hours, and smoked for four hours to produce smoked salmon meat.

The bacteriological test results of smoked salmon samples obtained in Example 1, Reference Examples and Comparative Example 1 are shown in Table 1. In another test, smoked salmon samples obtained in Example 1, Reference Examples, and Comparative Example 1 were evaluated based on the sensation characteristics of a panel of 15 well-trained testers. For each test item, the tester evaluated a test sample in comparison with a corresponding comparative sample (0 score), and gave a score of -4 to +4 to the test sample according to how worse or better it is when evaluated in comparison with the comparative sample. The scores of the 15 testers were summed and averaged for the test sample. The results are shown in Table 2.

**Table 1**

| Days of storage | Density of common bacteria (cells/g) | | | |
|---|---|---|---|---|
| | Example 1 | Reference (12007) | Reference (D1001) | Comparative Example 1 |
| 0 | 0 | 0 | 0 | <300 (0) |
| 20 | 0 | 0 | 0 | <300 (0) |
| 40 | 0 | 0 | 3.5 x 10² | 2.1 x 10⁴ |

As shown in Table 1, the smoked salmon sample treated by a cultivation medium used for cultivating Lactococcus lactis 12007 was found to be no common bacteria even when tested on the 40th day of storage.

**Table 2**

| Test item | Example 1 | Reference (12007) | Reference (D1001) | Comparative Example 1 |
|---|---|---|---|---|
| Taste | 0±0.1 | 0±0.1 | 0±0.2 | 0 |
| Flavor | 0±0.1 | 0±0.1 | 0±0.2 | 0 |
| Saltiness | 0±0.2 | 0±0.3 | 0±0.1 | 0 |
| Texture | 0±0.2 | 0±0.2 | 0±0.2 | 0 |
| Free from foreign taste & odor | 0±0.2 | 0±0.2 | 0±0.3 | 0 |

As shown in Table 2, the smoked salmon sample prepared in Example 1 was practically the same as the sample prepared in Comparative Example 1 in its taste, flavor and texture, suggesting that treatment consisting of immersing the test sample in a sterilized lactic acid cultivation medium did not have any adverse effect on the quality of the test smoked salmon sample.

### EXAMPLE 2

Frozen trout (Nippon Suisan Kaisha Ltd. product) was thawed, washed with running water, and divided into two equal meat portions and a central spinal column portion. The meat portions were immersed in an aqueous solution of 15% salt overnight, and rinsed with running water for 30 minutes to remove excess salt from the meat portions. On the other hand, a mixture comprising Lactococcus lactis 1207 and Lactobacillus sake D-1001 was allowed to grow on a medium containing, for every 1 1 of water, 10 g of salt, 10 g of glucose, 10 g of yeast extract and 30 g of soybean protein for 24 hours to give a density of 10⁹ cells/g, and the cultivation medium was sterilized by being heated at 65°C for 30 minutes. The meat portions were immersed in the sterilized solution at 10°C for 30 minutes. A culture containing Listeria monocytogenes at 10³ cfu/g was inoculated. Then, the meat portions were dried at 20°C for two hours, and smoked for four hours to produce smoked salmon meat. The smoked salmon meat was vacuum-packed in a sealed bag, and stored at 10°C.

### Comparative Example 2

Frozen trout (Nippon Suisan Kaisha Ltd. product) was thawed, washed with running water, and divided into two equal meat portions and a central spinal column portion. The meat portions were immersed in an aqueous solution of 15% salt overnight, and rinsed with running water for 30 minutes to remove excess salt from the meat portions. A culture containing Listeria monocytogenes at 10³ cfu/g was inoculated. Then, the meat portions were dried at 20°C for two hours, and smoked for four hours to produce smoked salmon meat. The smoked salmon meat was vacuum-packed in a sealed bag, and stored at 10°C.

The bacteriological test results of smoked salmon samples obtained in Example 2 and Comparative Example 2 and stored at 30°C for 24 hours are shown in Table 3.

**Table 3**

| Hours of storage | Density of Listeria bacteria (cells/g) | | | |
|---|---|---|---|---|
| | Example 2 | Reference (12007) | Reference (D1001) | Comparative Example 2 |
| 0 | 0 | 0 | 2.0 x 10¹ | 2.0 x 10² |
| 24 | 0 | 0 | 2.0 x 10³ | 2.8 x 10⁶ |

As seen from Table 3, the smoked salmon samples treated by cultivation media used for cultivating at least Lactococcus lactis 12007 were found to be no common bacteria even when they had received the inoculation of Listeria bacteria.

### Example 3

Frozen trout (Nippon Suisan Kaisha Ltd. product) was thawed, washed with running water, and divided into two equal meat portions and a central spinal column portion. The meat portions were immersed in an aqueous solution of 15% salt overnight, and rinsed with running water for 30 minutes to remove excess salt from the meat portions. On the other hand, a mixture comprising Lactobacillus sake D-1001 and Lactococcus lactis 12007 was allowed to grow on a medium containing, for every 1 l of water, 10 g of salt, 10 g of glucose, 10 g of yeast extract and 30 g of soybean protein for 24 hours to give a density of 10⁹ cells/g, and the cultivation medium was sterilized by being heated at 65°C for 30 minutes. The meat portions were immersed in the sterilized solution at 10°C for 30 minutes. Then, the meat portions were dried at 20°C for two hours, and smoked for four hours to produce smoked salmon meat.

### Comparative Example 3

Frozen trout (Nippon Suisan Kaisha Ltd. product) was thawed, washed with running water, and divided into two equal meat portions and a central spinal column portion. The meat portions were immersed in an aqueous solution of 15% salt overnight, and rinsed with running water for 30 minutes to remove excess salt from the meat portions. Then, the meat portions were dried at 20°C for two hours, and smoked for four hours to produce smoked salmon meat.

The L-values of the smoked salmon samples obtained in Example 3 and Comparative Examples 3 were plotted over time to trace the temporal change of the color tone of the samples.

**Table 4**

| Days of storage | L-value | | | |
|---|---|---|---|---|
| | Example 3 | Reference (12007) | Reference (D1001) | Comparative Example 3 |
| 0 | 44.76 | 43.87 | 44.27 | 44.77 |
| 14 | 45.27 | 45.32 | 45.67 | 49.27 |

As seen from Table 4, the increment of L-value over time was more effectively inhibited in the sample obtained in Example 3 than in the sample of Comparative Example 3. When the samples were treated either with Lactococcus lactis 12007 or Lactobacillus sake D-1001, the increment of L-value over time was more effectively inhibited than in the sample of Comparative Example 3, but Lactobacillus sake D-1001 inhibited the increment in question more effectively than Lactococcus lactis 12007. The increment of L-value over time was markedly inhibited when the sample was treated with a mixture comprising the two strains. The above observation was also visually confirmed: the sample of Comparative Example 3 looked slightly bleached while the sample of Example 3 indicated very limited bleaching, that is, it hardly underwent decoloration.

### EXAMPLE 4

Frozen trout (Nippon Suisan Kaisha Ltd. product) was thawed and washed with running water, and 25 g of meat was removed. A 5 g of the meat was homogenized with a food cutter, and a 2 g sample of the meat homogenate was transferred to a gas-chromatography vial with a cap. On the other hand, lactic acid bacteria were grown on a TSB medium at 30°C for 24 hours. A 100-µl aliquot of the culture medium was inoculated to a meat homogenate sample (test sample). As a control, a 100-µl aliquot of TSB medium instead of the culture medium was inoculated to another meat homogenate sample (control sample). The samples were kept at 10°C in a dark place. The oxygen content in the head space of each vial was determined at regular intervals by gas chromatography. As shown in Fig. 1, the temporal reduction of oxygen content in the head space of the vial is more effectively inhibited in the sample inoculated by Lactobacillus sake D-1001 than in the other samples, suggesting that treatment using Lactobacillus sake D-1001 inhibits oxidization.

### Industrial Applicability

According to the present invention, it is possible to provide fish meat which is less likely to suffer from microbial contamination, and whose color tone is preserved more effectively than conventionally treated fish meat by treating the meat with a lactic acid bacterium having antibacterial and anti-oxidative effects. Particularly, it is possible according to the present invention to provide fish meat free from Listeria contamination and whose color tone is preserved. It is possible to provide high quality fish meat by using Lactobacillus sake D-1001 (FERM P-11708 or IPOD FERM BP-08544) and Lactococcus lactis IF0 12007 in combination as lactic acid bacteria having antibacterial and anti-oxidative effects without affecting the taste and flavor of the meat. It is further possible to provide fish meat devoid of pathogenic bacteria such as Listeria bacteria and whose color tone is well preserved by treating the meat with a sterilized or disinfected culture medium used for cultivating lactic acid bacteria.

Smoked salmon meat obtained by the inventive method comprising treating salmon meat with a sterilized cultivation medium used for cultivating lactic acid bacteria having antibacterial and anti-oxidative effects, and smoking and drying the resulting salmon meat is excellent bacteriologically, in color and in long-term storage safety.

## Claims

1. A fish and shellfish meat treated with a lactic acid bacteria cultivation medium having antibacterial and anti-oxidative effects due to substances produced by the lactic acid bacteria.

2. A fish and shellfish meat according to Claim 1 wherein the lactic acid bacteria comprise a lactic acid bacterium having antibacterial and anti-oxidative effects, or two lactic acid bacteria in combination, one having antibacterial effect and the other anti-oxidative effect.

3. A fish and shellfish meat according to Claim 1 or 2 which is free from Listeria contamination and whose color tone is preserved.

4. A fish and shellfish meat according to Claim 1, 2 or 3 wherein the cultivation medium is sterilized or deprived of lactic acid bacteria.

5. A fish and shellfish meat according to any one of Claims 1 to 4 wherein the treatment comprises immersing the meat in a lactic acid bacteria cultivation medium.

6. A fish and shellfish meat according to any one of Claims 1 to 5 wherein the lactic acid bacteria comprise a combination of Lactobacillus sake D-1001 (IPOD FERM PB-08544) and Lactococcus lactis IFO 12007.

7. A fish and shellfish meat according to any one of Claims 1 to 6 wherein the meat is derived from salmon, trout or cod.

8. A fish and shellfish meat according to any one of Claims 1 to 7 wherein the meat contains astaxanthin.

9. A fish and shellfish meat according to any one of Claims 1 to 8 wherein the meat comprises fresh fish and shellfish meat, pasteurized fish and shellfish meat, fresh fish eggs or pasteurized fish eggs.

10. A smoked fish and shellfish meat obtained from the fish and shellfish meat according to any one of Claims 1 to 9.

11. An anti-oxidative agent containing a cultivation medium used for cultivating Lactobacillus sake D-1001 (IPOD FERM BP-08544).

12. A color tone preserving agent based on the anti-oxidative effect of a cultivation medium used for cultivating Lactobacillus sake D-1001 (IPOD FERM BP-08544).

13. A color tone preserving agent useful for the storage of astaxanthin-containing food products based on the anti-oxidative effect of a cultivation medium used for cultivating Lactobacillus sake D-1001 (IPOD FERM BP-08544).
